# FASCICULE DE BREVET EUROPEEN

(11) **EP 3 049 317 B1**
(45) Date de publication et mention de la délivrance du brevet: **31.10.2018**
(21) Numéro de dépôt: 14777711.4
(22) Date de dépôt: 05.09.2014
(51) Int. Cl.: B62D 65/02

(54) **PROCEDE DE RETOUCHE D'UN ELEMENT DE CARROSSERIE DE VEHICULE AUTOMOBILE**
VERFAHREN ZUM NACHBESSERN EINES FAHRZEUGKAROSSERIEELEMENTS
METHOD FOR TOUCHING UP AN ELEMENT OF THE BODY OF A MOTOR VEHICLE

(30) Priorité: 25.09.2013 FR 1359236
(43) Date de publication de la demande: 03.08.2016
(73) Titulaire: PSA Automobiles SA, 78300 Poissy (FR)
(72) Inventeur: GRANGEIRO, Henriqué, CEP 27522-130 Resende - Rio De Janeiro (BR)
(86) Numéro de dépôt international: PCT/FR2014/052193
(87) Numéro de publication internationale: WO 2015/044551

(56) Documents cités:
- EP-A1- 2 518 336
- FR-A1- 2 923 876
- FR-A1- 2 938 889
- JP-U- 3 174 215
- US-A1- 2008 303 307

## Description

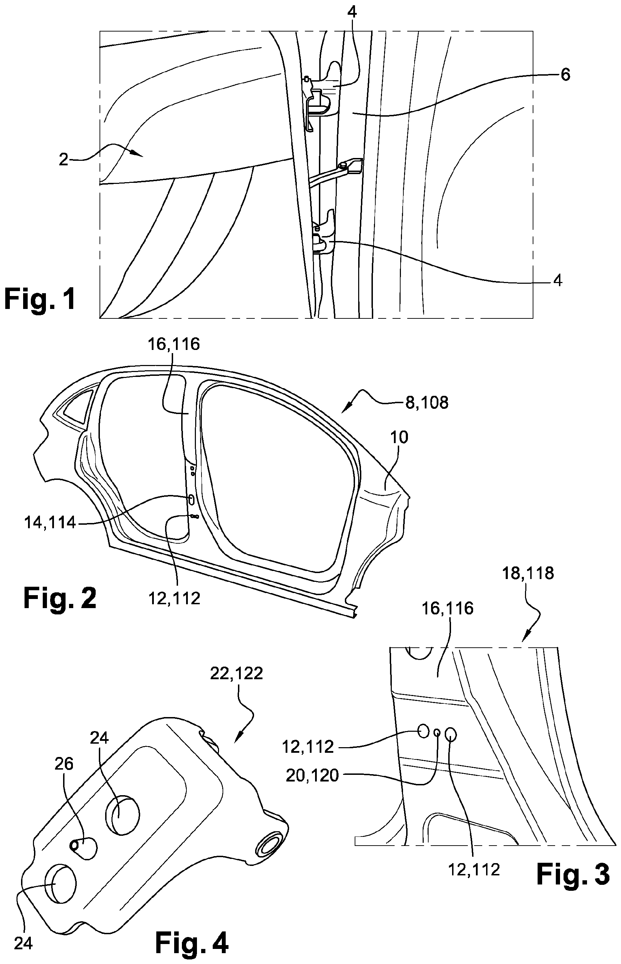

L'invention a trait au domaine de la formation et/ou de la retouche d'orifices d'indexage dans un élément tel qu'un élément de caisse de véhicule. Il peut notamment s'agir d'orifices d'indexage de charnières de portes de véhicule automobile. Plus particulièrement l'invention a trait au guidage d'un outil de mise à forme pour la formation et/ou la retouche de tels orifices, plus particulièrement encore à un procédé de réalisation d'un orifice d'indexage sur un élément de caisse d'un véhicule au moyen d'un gabarit de guidage d'un outil de mise à forme d'un élément. La figure 1 illustre une porte de véhicule automobile 2 montée sur un système de charnières 4, elles-mêmes fixées sur un montant central 6 d'un côté gauche de caisse de véhicule. Les charnières sont fixées par des systèmes de vis et écrous, les vis pénétrant dans des orifices sur les montants des côtés de caisse. Un côté de caisse droit nu 8 est illustré à la figure 2 par sa face extérieure 10, la figure rendant aussi visibles des orifices 12 de fixation de charnières ainsi que des ajours 14 de passage de câbles électriques, l'un d'eux étant situé sur le montant central 16. La figure 3 illustre une zone de fixation 18 d'une charnière pilote sur le montant central 16 du côté de caisse 8, la zone disposant de trois orifices, les deux orifices latéraux 12 étant ceux prévus pour la fixation de la charnière, l'orifice central 20 étant celui destiné à l'indexage de cette charnière pilote sur le côté de caisse. La figure 4 illustre une charnière pilote 22 qui comprend deux trous de fixations 24 ainsi qu'un élément d'indexage conique 26 en saillie entre les deux trous de fixation. La configuration de trois orifices sur un côté de caisse ne se présente que dans le cas du montage d'une telle charnière pilote indexée, destinée à donner une position de référence à la porte qu'elle supporte. Le système de deux charnières de montage d'une porte ne comprend qu'une telle charnière pilote, généralement celle inférieure dans le cas d'un montage de porte latérale d'un véhicule. Les orifices de fixation et d'indexage dans un côté de caisse, comme mentionnés ci-dessus, sont généralement obtenus par découpe lors de la phase d'emboutissage de ce côté, les positions de ces orifices étant généralement des positions définitives avant un montage des charnières.

Or, lors du développement d'un véhicule, il est courant qu'il y ait des chevauchements d'étapes de développement, des phases finales de conception de certains éléments du véhicule pouvant interférer avec des phases de production pour d'autres éléments, les unes venant alors affecter les autres. Dans le cas d'une finalisation d'un positionnement de portière sur un véhicule, une modification même infime du positionnement d'un orifice d'indexage peut être requise alors même que des lots de côtés de caisse, ayant cet orifice, peuvent déjà avoir été emboutis, de telles pièces ayant alors des orifices d'indexage non conformes en position au cahier des charges final du véhicule. Dans de telles circonstances, de telles pièces peuvent être mises au rebus en raison de ce seul défaut qualité. Ce rebus est une perte économique substantielle, pouvant aussi engendrer des retards critiques dans les flux des opérations, et à l'extrême un délai dans la date de lancement du véhicule, date de lancement ayant une importance telle que pouvait être prévu, pour s'y tenir, un chevauchement des phases de conception et de fabrication.

Le document de brevet US 2011/0082461 A1 divulgue un gabarit de perçage manuel pour fraise de praticien dentiste, le gabarit étant positionné à un endroit visible où doit être effectué le soin, le praticien étant ainsi aidé dans son opération.

Il est aussi connu d'utiliser des gabarits de perçage dans le secteur du bricolage, de tels aides au perçage étant généralement munis de systèmes de butées en plus des guides de perçage, guides dont les positionnements sont alors préliminairement déterminés.

Un exemple de gabarit de perçage est divulgué par le document JP3174215U. Dans les deux cas, il y a une recherche de solution correspondant à des problèmes de mise à forme manuelle d'orifices devant être effectués en des positions précises, soit visuellement, soit selon des éléments de référence, en l'occurrence les orifices sont effectués à l'aide d'outils rotatifs pour des mises à forme correspondantes. Ces gabarits ne sont cependant pas adaptés à un élément de carrosserie comme celui décrit aux figures 1 à 3.

L'invention a pour objectif de proposer une solution au problème d'incident qualité provenant d'un mauvais positionnement d'orifices d'indexage dans un élément tel qu'un côté de caisse embouti, et donc au problème de perte économique liée au rebus. L'invention a pour objet un procédé de réalisation d'un orifice d'indexage sur un élément de caisse d'un véhicule au moyen d'un gabarit de guidage d'un outil de mise à forme d'un élément, le gabarit comprenant un corps avec des moyens de guidage de l'outil ; et des moyens de positionnement du corps sur l'élément, remarquable en ce que les moyens de positionnement sont configurés pour pouvoir coopérer avec deux orifices de l'élément, de manière à permettre au gabarit de coopérer avec une zone de fixation d'une charnière d'une portière de véhicule sur un élément de la caisse d'un véhicule, conformément à l'objet de la revendication 1.

Selon un mode avantageux de l'invention, l'étape de retouche est opérée sur l'élément de caisse qui est un côté de caisse avec un montant central, les orifices de fixation et d'indexage étant formés sur ledit montant en vue de la fixation d'une charnière, préférentiellement inférieure, de porte arrière.

Selon un mode avantageux de l'invention, l'étape de retouche est opérée sur le montant central comprenant un ajour destiné au passage de câbles électriques, le gabarit équipé d'un doigt détrompeur s'étendant essentiellement parallèlement aux moyens de positionnement étant mis en place sur ledit montant avec le doigt détrompeur dans ledit ajour.

Selon un mode avantageux de l'invention, l'étape de retouche comprend la manipulation de l'outil guidé par le gabarit en vue de modifier la forme de l'orifice d'indexation.

Les mesures de l'invention sont intéressantes en ce qu'elles permettent de réaliser et/de retoucher de manière précise et aisée un orifice d'indexage sur un élément. Le fait de pouvoir positionner et éventuellement fixer le gabarit via des orifices de l'élément est garant d'une grande précision et stabilité. Le procédé de réalisation d'un orifice d'indexage permet d'éviter de mettre au rebus des pièces de côté de caisse dont le seul défaut qualité est le mauvais placement, même infime, d'un orifice d'indexage. Elles permettent de réduire le risque de délai d'un lancement de véhicule qui pourrait subvenir du au délai de fabrication de nouveaux outils d'emboutissage et à la production y associée.

D'autres caractéristiques et avantages de la présente invention seront mieux compris à l'aide de la description et des dessins parmi lesquels :
- La figure 1 est une vue en perspective d'une porte arrière de véhicule automobile, montée sur deux charnières fixées sur une montant de côté de caisse.
- La figure 2 est une vue en perspective d'un côté de caisse nu.
- La figure 3 est une vue en perspective d'un détail de la figure 2 correspondant à une zone de fixation d'une charnière inférieure de porte arrière droite.
- La figure 4 est une vue en perspective d'une charnière pilote.
- La figure 5 est une vue en perspective d'un gabarit selon l'invention.
- La figure 6 est une vue en perspective d'une entretoise de fixation du gabarit de la figure 5.
- La figure 7 est une vue en perspective du gabarit de la figure 5, en position de montage sur un montant central de caisse de véhicule, pour une opération de retouche d'un orifice d'indexage selon l'invention.

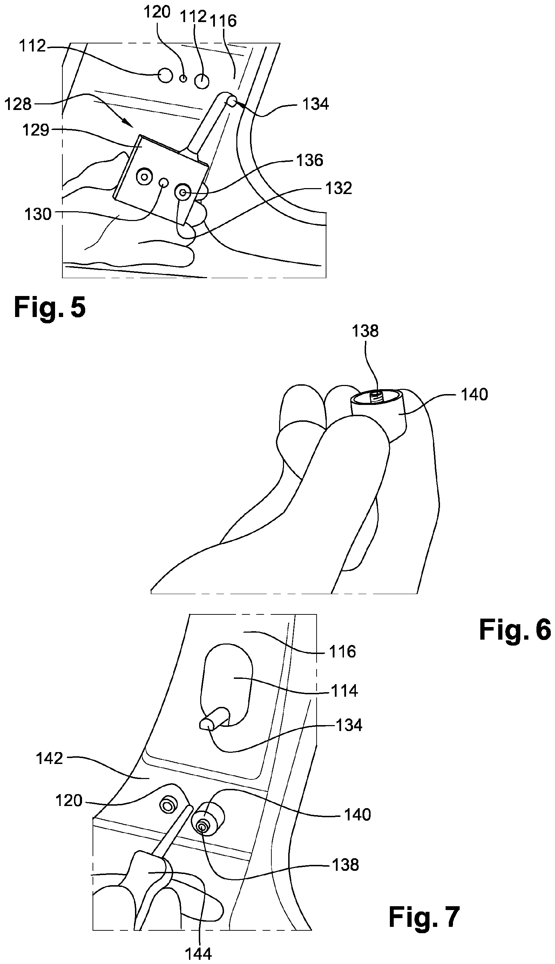

Les figures 1 à 4 ont été décrites précédemment en relation avec la discussion de l'état de la technique. Il est à noter que ces figures sont également valables pour le procédé et l'outillage de l'invention qui vont être décrits en relation avec les figures 5 à 7. Les numéros de référence inférieurs à 100 ont trait à l'état de la technique et les numéros de référence correspondants majorés de 100 ont trait à l'invention.

La figure 5 est une vue en perspective d'un gabarit 128 conforme à l'invention. Il comprend un corps 129 avec un orifice de guidage 130, deux surfaces circulaires de positionnement 132 faisant saillie, essentiellement perpendiculairement, à un plan moyen du corps 129. Les surfaces de positionnement 132 sont aptes à s'insérer dans les deux orifices 112 situés sur le montant central 116 du côté de caisse 108 (figure 2), les deux orifices étant destinés à la fixation d'une charnière pilote 122 (figure 4). Le gabarit 128 comprend également un doigt détrompeur 134 s'étendant parallèlement aux surfaces de positionnement 132. Il est relié au corps 129 par un bras s'étendant essentiellement dans le plan moyen dudit corps 129. Lorsque les surfaces de positionnement sont logées correctement dans les orifices 112 sur le montant 116, le doigt 134 s'insère alors dans un ajour 114 dudit montant, en l'occurrence un passage de câbles électrique. Si le gabarit est mal présenté sur la surface du montant avec lequel le gabarit est destiné à coopérer, par exemple à 180° de sa position prévue, le doigt vient alors en interférence avec une surface non ajourée et les surfaces de positionnement ne peuvent pas coopérer avec les orifices. Le corps 129 comprend deux orifices filetés 136 perpendiculaires au plan moyen du corps. Les orifices filetés coopèrent avec des vis pour la fixation du corps du gabarit sur la surface du côté de caisse.

La figure 6 est une vue en perspective d'une vis 138 et d'une entretoise 140. Deux vis et deux entretoises sont utilisées pour la fixation du corps 129 du gabarit. Les entretoises sont aptes à venir en appui sur une face du montant opposée à la face sur laquelle le gabarit est apte à être positionné. Les vis en appui sur les entretoises, pénètrent par l'intérieur de celles-ci dans les orifices filetés du corps du gabarit.

La figure 7 est une vue en perspective d'une vis 138 fixée sur un corps de gabarit ainsi que d'une entretoise 140 en appui sur une face 142 du montant 116. Cette face 142 peut être par convention la face opposée à la face sur laquelle se trouve la zone de fixation 118 (figure 2) de la charnière pilote inférieure de portière de véhicule, la zone étant sur un montant central 116 d'un côté de caisse 108 (figure 2). Sur cette figure est aussi visible le doigt détrompeur 134 passant dans l'ajour 114 de passage de câbles électriques. La convention respectée et le doigt en position, la situation est conforme à celle requise par une spécification de préparation de retouche de l'orifice d'indexage 120 qui peut avoir été définie pour une telle préparation. Les surfaces de positionnement sont logées correctement dans les deux orifices de fixation. Les autres éléments du gabarit sont masqués sur cette figure.

Un outil à main 144 y est employé, en l'occurrence une lime ronde dont la section peut être inférieure à la section de l'orifice d'indexage 120, rendant plus aisé le démarrage de l'opération de retouche. La manipulation de l'outil est guidée par le gabarit en vue de modifier la forme de l'orifice d'indexage 120, l'opérateur effectuant la retouche pouvant se positionner du côté visible de l'orifice d'indexage, ce qui permet d'évaluer la direction, transversale à l'orifice, vers laquelle la retouche est effectuée, direction qui sera celle vers laquelle doit, essentiellement, être mise en butée la charnière 122 (figure 4) avant sa fixation sur le côté de caisse. En effet, après retouche l'orifice d'indexage originalement généralement circulaire, sera devenu oblong. Si l'opérateur effectuant la retouche n'est pas celui effectuant le montage de la charnière, il lui est recommandé d'indiquer par un commentaire la direction vers laquelle la charnière doit être calée avant sa fixation. De cette manière, la charnière sera montée selon la spécification dimensionnelle finale du véhicule, l'ensemble transformé, du côté de caisse muni de la charnière, correspondant en un ensemble dimensionnel conforme en vue du montage de la portière.

Afin de redonner à l'orifice d'indexage, après retouche, sa forme circulaire, il peut être envisagé que de la matière, par exemple une pastille, soit ajoutée dans la partie de l'orifice à reboucher.

Le gabarit est un acier, préférentiellement un acier de grande dureté.

## Revendications

1. Procédé de réalisation d'un orifice d'indexage (120) sur un élément de caisse (116) d'un véhicule au moyen d'un gabarit de guidage (128) d'un outil (144) de mise à forme de l'élément (116), le gabarit comprenant un corps (129) avec :
- des moyens de guidage (130) de l'outil (144); et
- des moyens de positionnement (132, 136) du corps (129) sur l'élément (116) ;
les moyens de positionnement (132, 136) étant configurés pour pouvoir coopérer avec deux orifices (112) de l'élément (116), de manière à permettre au gabarit de coopérer avec une zone de fixation (118) d'une charnière (122) d'une portière de véhicule sur un élément (116) de la caisse d'un véhicule, le corps (129) étant généralement étendu dans un plan moyen, les moyens de positionnement (132, 136) et/ou de guidage (130) s'étendant transversalement, préférentiellement essentiellement perpendiculairement, au plan moyen du corps (129), ledit procédé comprenant une étape de réalisation des deux orifices de fixation (112) et de l'orifice d'indexage (120), préférentiellement lors de l'emboutissage dudit élément, **caractérisé par** une étape ultérieure de retouche de l'orifice d'indexage (120) au moyen de l'outil de mise à forme (144), préférentiellement par enlèvement de copeaux, et dudit gabarit (128).

2. Procédé selon la revendication 1, **caractérisé en ce que** l'élément de caisse est un côté de caisse (108) avec un montant central (116), les orifices de fixation (112) et d'indexage (120) étant formés sur ledit montant en vue de la fixation d'une charnière (122), préférentiellement inférieure, de porte arrière.

3. Procédé selon l'une des revendications 1 et 2, **caractérisé en ce que** le montant central (116) comprend un ajour (114) destiné au passage de câbles électriques, le gabarit comprenant un doigt détrompeur (134) s'étendant essentiellement parallèlement aux moyens de positionnement (132, 136) de manière à pouvoir coopérer par insertion avec l'ajour (114), et l'étape de retouche comprenant la mise en place du gabarit (128) sur ledit montant avec le doigt détrompeur (134) dans ledit ajour (114).

4. Procédé selon l'une quelconque des revendications précédentes, **caractérisé en ce que** l'étape de retouche comprend la manipulation de l'outil (144) guidé par le gabarit (128) en vue de modifier la forme de l'orifice d'indexation (120).

## Patentansprüche

1. Verfahren zum Herstellen einer Positionierungsöffnung (120) auf einem Karosserieelement (116) eines Fahrzeugs mittels einer Führungsschablone (128) eines Werkzeugs (144) zum Ausgestalten des Elements (116), wobei die Schablone einen Körper (129) umfasst mit:
- Führungsmitteln (130) des Werkzeugs (144); und
- Positionierungsmitteln (132, 136) des Körpers (129) auf dem Element (116);
wobei die Positionierungsmittel (132, 136) konfiguriert sind, um mit zwei Öffnungen (112) des Elements (116) zusammenwirken zu können, um es der Schablone zu erlauben, mit einer Befestigungszone (118) eines Scharniers (122) einer Fahrzeugtür auf einem Element (116) der Karosserie eines Fahrzeugs zusammenzuwirken, wobei sich der Körper (129) im Allgemeinen in einer mittleren Ebene erstreckt, wobei sich die Positionierungsmittel (132, 136) und/oder Führungsmittel (130) quer erstrecken, bevorzugt im Wesentlichen senkrecht zu der Mittenebene des Körpers (129), wobei das Verfahren einen Herstellungsschritt der zwei Befestigungsöffnungen (112) und der Positionierungsöffnung (120) bevorzugt beim Stanzen des Elements umfasst, **gekennzeichnet durch** einen späteren Nachbesserungsschritt der Positionierungsöffnung (120) mittels des Ausgestaltungswerkzeugs (144), bevorzugt durch Abheben von Spänen, und der Schablone (128).

2. Verfahren nach Anspruch 1, **dadurch gekennzeichnet, dass** das Karosserieelement eine Karosserieseite (108) mit einem Mittenständer (116) ist, wobei die Befestigungsöffnungen (112) und Positionierungsöffnung (120) auf dem Ständer zur Befestigung eines Scharniers (122), bevorzugt eines unteren, einer hinteren Tür gebildet werden.

3. Verfahren nach einem der Ansprüche 1 und 2, **dadurch gekennzeichnet, dass** der Mittenständer (116) einen Ausschnitt (114) umfasst, der für das Durchgehen elektrischer Kabel bestimmt ist, wobei die Schablone einen Unverwechselbarkeitsfinger (134) umfasst, der sich im Wesentlichen parallel zu den Positionierungsmitteln (132, 136) derart erstreckt, dass er durch Einsetzen in den Ausschnitt (114) zusammenwirken kann, und wobei der Nachbesserungsschritt das Anbringen der Schablone (128) auf dem Ständer mit dem Unverwechselbarkeitsfinger (134) in dem Ausschnitt (114) umfasst.

4. Verfahren nach einem der vorhergehenden Ansprüche, **dadurch gekennzeichnet, dass** der Nachbesserungsschritt die Handhabung des Werkzeugs (144), das von der Schablone (128) geführt wird, zum Ändern der Form der Positionierungsöffnung (120) umfasst.

## Claims

1. A method for providing an indexing opening (120) on a body element (116) of a vehicle by means of a jig (128) for guiding a tool (144) for shaping the element (116), the jig including a body (129) with:
- means (130) for guiding the tool (144); and
- means (132, 136) for positioning the body (129) on the element (116);
the positioning means (132, 136) being configured to be able to cooperate with two openings (112) of the element (116), so as to permit the jig to cooperate with an attachment zone (118) of a hinge (122) of a vehicle door on a vehicle body element (116), the body (129) being generally extended in a median plane, the positioning means (132, 136) and/or guiding means (130) extending transversely, preferably essentially perpendicularly, to the median plane of the body (129), said method including a step of providing the two attachment openings (112) and the indexing opening (120), preferably during the stamping of said element, **characterized by** a subsequent step of touching up the indexing opening (120) by means of the shaping tool (144), preferably by chip removal, and of said jig (128) .

2. The method according to Claim 1, **characterized in that** the body element is a body side (108) with a central pillar (116), the openings for attachment (112) and indexing (120) being formed on said pillar with the purpose of the attachment of a, preferably lower, hinge (122), of a rear door.

3. The method according to one of Claims 1 and 2, **characterized in that** the central pillar (116) includes an opening (114) intended for the passage of electrical cables, the jig including a locating pin (134) extending essentially parallel to the positioning means (132, 136) so as to be able to cooperate by insertion with the opening (114), and the touching up step including the placing of the jig (128) on said pillar with the locating pin (134) in said opening (114).

4. The method according to any one of the preceding claims, **characterized in that** the touching up step includes the manipulation of the tool (144) guided by the jig (128) for the purpose of modifying the shape of the indexing opening (120).
